# EUROPÄISCHE PATENTSCHRIFT

(11) **EP 0 867 626 B1**
(45) Veröffentlichungstag und Bekanntmachung des Hinweises auf die Patenterteilung: **19.06.2002**
(21) Anmeldenummer: 98103687.4
(22) Anmeldetag: 03.03.1998
(51) Int. Cl.: F16B 37/04

(54) **Verbindungsmittel zur Vormontage einer Schraube**
Fastening means for a screw preassembly
Moyens de liaison pour le premontage d'une vis

(30) Priorität: 29.03.1997 DE 19713236
(43) Veröffentlichungstag der Anmeldung: 30.09.1998
(73) Patentinhaber: A. Raymond & Cie, F-38028 Grenoble-Cédex (FR)
(72) Erfinder: Boville, Daniel, 75020 Paris (FR)
(74) Vertreter: Kirchgaesser, Johannes, Dipl.-Ing.

(56) Entgegenhaltungen:
- FR-A- 1 487 978
- US-A- 1 881 836
- US-A- 2 905 287
- US-A- 4 208 944

## Beschreibung

Die Erfindung bezieht sich auf Verbindungsmittel zur Vormontage einer Schraube an einem von zwei miteinander zu verbindenden Bauteilen, wobei die Schraube in einem durchgehenden Loch eines verformbaren Verbindungsteils gehalten ist und dieses seinerseits mittels an ihm angeformter Fortsätze mit den Kanten einer Öffnung eben dieses einen Bauteils derart in Eingriff bringbar ist, daß die Schraube unter Verformung des Verbindungsteils durch die Öffnung des Bauteils hindurch bewegbar ist

Durch die französische Patentschrift Nr. 1 487 978 ist ein derartiges Verbindungsteil bekannt, das einen Körper in Form eines aufrecht stehenden Quaders mit einem durchgehenden kreisrunden Loch aufweist, in das eine Schraube eingedreht werden kann. Etwa in halber Höhe sind an diesem Körper seitlich abragende und nach unten und aufeinander zugebogene Flügel angeformt, die an ihren freien Enden jeweils einen sich in Achsrichtung erstreckenden Fortsatz mit einer nach außen gerichteten Eingriffsnase aufweisen. Die beiden Fortsätze halten einen Abstand zueinander, durch den der unterhalb der Flügel befindliche Teil des quaderförmigen Körpers derart hindurchgeschoben werden kann, daß die freien Kanten der Fortsätze in Eingriff kommen mit zwei seitlich an dem Körper vorgesehenen Kerben. In einer Platte, an der die Schraube vormontiert werden soll, ist eine viereckige Öffnung vorgesehen, deren Breite und Länge der Breite und dem Abstand der beiden Fortsätze entsprechen. Zur Vormontage der Schraube werden die beiden Fortsätze durch die viereckige Öffnung der Platte gesteckt, bis sie mit ihren Eingriffsnasen zwei einander gegenüberliegende Kanten dieser Öffnung hintergreifen. Danach wird der quaderförmige Körper mit der darin eingedrehten Schraube unter Verformung der gebogenen Flügel und an den Innenflächen der Fortsätze gleitend weiter vorgeschoben, bis die freien Kanten der Fortsätze in seinen seitlichen Kerben einrasten. So wird die Schraube in Bereitschaft gehalten zur Verbindung der Platte mit einem anderen Bauteil, in dem ein Bohrloch für die Schraube vorgesehen ist, in das die Schraube ein- oder durchgedreht und eventuell mit einer Mutter gesichert werden kann.

Dieses Verbindungsteil ist auf Grund seiner verhältnismäßig komplizierten Form aufwendig in der Herstellung. Es hat außerdem den Nachteil, daß der die Schraube aufnehmende, quaderförmige Körper für die Endmontage genau auf das Bohrloch des zweiten Bauteils ausgerichtet sein muß, um die endgültige Verbindung herstellen zu können. Vor allem wenn, was normalerweise der Fall ist, mehrere Verbindungsstellen an den beiden Bauteilen vorgesehen sind, bereitet dies Schwierigkeiten und erfordert die Einhaltung enger Toleranzen beim Einschneiden der viereckigen Öffnungen in dem plattenförmigen Bauteil und dem Setzen der Bohrlöcher in dem anderen Bauteil. Daß die Schraube in den quaderförmigen Körper über eine gewisse Distanz eingedreht werden muß, macht schon die Vormontage umständlich und zeitraubend. Die Einsatzmöglichkeit dieses bekannten Verbindungsteils ist außerdem insofern beschränkt, als die zu verbindenden Bauteile nur in einem Abstand zueinander montiert werden können, der bestimmt wird durch das Maß, um das der quaderförmige Körper zwischen den Fortsätzen der Flügel hindurchgeschoben werden muß, damit die Kanten dieser Fortsätze an den seitlichen Kerben des Körpers in Eingriff kommen können. Der quaderförmige Körper wirkt zusammen mit den Fortsätzen der Flügel also wie ein Distanzstück zwischen den zu montierenden Bauteilen. Eine Montage, nach der die Flächen der zu verbindenden Bauteile eng oder sogar unmittelbar aneinander an- oder aufliegen, ist mit diesem Verbindungsteil nicht möglich.

Aufgabe der Erfindung ist es, ein Verbindungsteil für die Vormontage von Schrauben zu schaffen, das preisgünstig herzustellen und gegenüber dem Stand der Technik auch einfach und zeitsparend in der Anwendung ist, insbesondere aber den Ausgleich von Toleranzen zwischen den Bohrlöchern erlaubt. Die Schraube soll dabei unverlierbar in dem Verbindungsteil in Bereitschaft gehalten werden.

Erfindungsgemäß wird dies dadurch erreicht, daß das Verbindungsteil aus zwei, einander mit Abstand gegenüberliegenden, flachen Abschnitten besteht, die durch zwei zur vertikalen Mittelachse spiegelbildlich angeordnete Halbrunde zu einem in sich geschlossenen Teil verbunden sind, daß in dem einen, von der Montagefläche des Bauteils entfernteren Abschnitt ein kreisrundes Loch zur Aufnahme der Schraube und in dem anderen, auf der Montagefläche zur Auflage kommenden Abschnitt ein in der Verlängerung der Halbrunde liegendes Langloch vorgesehen ist, durch das hindurch die Schraube unter Verformung der Halbrunde vorschiebbar ist, und daß an den Längsseiten des Langlochs in einem durch Ansätze bestimmten Abstand horizontale Fortsätze angeformt sind, mit denen Kanten einer Öffnung in dem einen der zu verbindenden Bauteile hintergreifbar sind.

Das Langloch in dem unteren, auf der Montagefläche des einen vorzugsweise plattenförmigen Bauteils zur Auflage kommenden Abschnitts des Verbindungsteils erlaubt einen Toleranzausgleich sowohl bei der Vormontage der Schraube als auch besonders bei der Endmontage der zu verbindenden Bauteile. Die Schrauben müssen nicht genau auf die Öffnung in dem einen Bauteil und auf das Bohrloch an der Verbindungsstelle des zweiten Bauteils ausgerichtet sein. Es können somit großzügere Toleranzen beim Setzen der Bohrlöcher und Einschneiden der Öffnungen vorgesehen werden, was die Herstellungskosten senkt und die Arbeit bei der Vor- und der Endmontage erleichtert und weniger zeitraubend macht.

Die Dicke des von der Montagefläche entfernteren Abschnitts des Verbindungsteils mit dem kreisrunden Loch zur Aufnahme der Schraube entspricht vorteilhafterweise der Ganghöhe der Schraube, und der Durchmesser des kreisrunden Loches sollte gleich oder wenig kleiner als der Außendurchmesser der Schraube sein. So kann die Schraube mit leichtem Druck einfach und ohne schraubende Bewegung in das Loch als für sie vorgesehene Halterung eingedrückt werden und bleibt unverlierbar darin gehalten.

Vorzugsweise kann der Durchmesser des kreisrunden Loches gleich dem mittleren Gewindedurchmesser der Schraube sein, womit die Unverlierbarkeit der darin gehaltenen Schraube absolut sicher gestellt ist.

Nach einer besonders einfach und preisgünstig herzustellenden Ausführungsform der Erfindung weist die Öffnung an der vorgesehenen Verbindungsstelle des einen plattenförmigen Bauteils die Form eines Langlochs auf, wobei in dessen Längsrichtung das Verbindungsteil mit seinen Fortsätzen eingesteckt werden kann und dessen Längskanten bei einer anschließenden Drehung des Verbindungsteils um 90° von diesen Fortsätzen untergriffen werden.

Um zu vermeiden, daß bei der Herstellung der Verbindung zwischen den beiden Bauteilen zwischen diesen ein durch die Höhe der eine Art Hals bildenden Ansätze bestimmter Zwischenraum entsteht, kann in der Wand der das Verbindungsteil aufnehmenden Öffnung auf der von ihm abgewandten Seite eine Ausnehmung vorgesehen werden, innerhalb der die Fortsätze versenkt und auf einer Stufe Auflage findend um 90° drehbar sind. So können später die Bauteile unmittelbar aufeinander aufliegend miteinander verbunden werden.

Vorzugsweise weisen die Fortsätze ein teilkreisförmiges Profil auf und die Schmalseiten der langlochförmigen Öffnung in dem einen vorzugsweise plattenförmigen Bauteile sind dementsprechend teilkreisförmig ausgebildet.

Nach einer bevorzugten Ausführungsform der Erfindung sind die Fortsätze und die deren Abstand zum auf dem Bauteil zur Auflage kommenden Abschnitt des Verbindungsteils bestimmenden Ansätze als übereinander liegende, teilkreisförmige Profile mit unterschiedlichem Radius ausgebildet, wobei die Fortsätze in Richtung ihrer Mittellinie überstehen.

Die Öffnung in dem plattenförmigen Bauteil kann dann vorteilhaft in der Draufsicht ein Profil aufweisen, das sich aus zweimal zwei, jeweils einander gegenüberliegenden Teilkreisen mit unterschiedlichen Radien zusammensetzt, wobei die Teilkreise mit dem kleineren Radius in Form, Größe und gegenseitigem Abstand den teilkreisförmigen Fortsätzen des Verbindungsteils und die Teilkreise mit dem größeren Radius den teilkreisförmig ausgebildeten Ansätzen entsprechen. Das Verbindungsteil paßt so in einer Richtung vorzugsweise mit leichten Spiel in die Öffnung und beim anschließenden Verdrehen um 90° können die Ansätze an den entsprechenden Wandabschnitten der Öffnung geführt entlanggleiten.

Wenn die Ausnehmungen in der Wand der Öffnung des plattenförmigen Bauteils jeweils ausgehend von der Scheitellinie der Teilkreise mit dem kleineren Radius in zwei einander gegenüberliegenden Quadranten und bezogen auf den Mittelpunkt der Öffnung einen Viertelkreis beschreiben und sich in den anschließenden Quadranten mit dem Radius der kleineren Teilkreise fortsetzen, so daß in der Wand der Öffnung einander gegenüberliegende Anschlagskanten für die Fortsätze des Verbindungsteils entstehen, wird verhindert, daß das Verbindungsteil um mehr als um 90° verdreht werden kann.

Nach einer anderen bevorzugten Ausführungsform der Erfindung ist eine zusätzliche Verdrehsicherung vorgesehen. Dazu sind die Ausnehmungen in der Wand der Öffnung des plattenförmigen Bauteils wiederum jeweils ausgehend von der Scheitellinie der Teilkreise mit dem kleineren Radius in zwei einander gegenüberliegenden Quadranten derart ausgebildet, daß sie über 30° bezogen auf den Mittelpunkt der Öffnung zunächst den kleineren Teilkreisen der Öffnung, dann von 30° bis ca. 60 ° Teilkreisen, deren Mittelpunkt mit dem der Öffnung zusammenfallen, und danach bis in den benachbarten Quadranten wieder Teilkreisen gleich denen mit dem kleineren Radius der Öffnung folgen, wodurch innerhalb dieser Ausnehmungen zusätzlich beim Winkel von 30° einander gegenüberliegende Rastkanten und beim Winkel von 60° Schnappkanten entstehen.

Die Öffnung in dem plattenförmigen Bauteil und die in ihrer Wand vorgesehenen Ausnehmungen werden dann vorteilhaft so bemessen, daß die Fortsätze des Verbindungsteils in einer Richtung mit Spiel in diese Öffnung passen und beim Verdrehen um 90° nach Überwindung eines leichten, durch die Rastkanten entgegengesetzten Widerstandes zwischen 30° und 60° eng an den Teilkreisen der Ausnehmungen entlang geführt werden und danach hinter den Schnappkanten einschnappen. Indem in der einen Richtung die Rastkanten in der anderen Richtung die Schnappkanten dem Verdrehen des Verbindungsteils einen leichten, aber spürbaren Widerstand entgegensetzen und die Fortsätze nach der Drehung um 90° in ihrer Endstellung einschnappen lassen, wird ein ungewolltes Verdrehen des Verbindungsteils in der Öffnung sicher verhindert.

Die Erfindung wird im folgenden anhand der anhängenden Zeichnung an einer bevorzugten Ausführungsform beispielhaft genauer beschrieben. Es zeigen
- Fig. 1a: eine Seitenansicht eines erfindungsgemäßen Verbindungsteils,
- Fig. 1b: eine Seitenansicht gemäß Fig.1 mit eingesetzter Schraube im Maßstab 1 : 1
- Fig. 2: die Draufsicht auf das Verbindungsteil in Richtung des Pfeiles II in Fig.1,
- Fig. 3: die Schnittansicht gemäß der Schnittlinie III - III in Fig.1 ohne Schraube,
- Fig. 4: die Schnittansicht gemäß der Schnittlinie IV -IV in Fig. 2 ohne Schraube,
- Fig. 5: als Ausschnitt die Draufsicht auf eine für die Vormontage eines erfindungsgemäßen Verbindungsteils geeignete Verbindungsstelle eines plattenförmigen Bauteils gemäß einer Ausführungsform der Erfindung,
- Fig. 6: die Schnittansicht gemäß der Schnittlinie VI - VI in Fig. 5,
- Fig. 7: einen Fig. 5 entsprechenden Ausschnitt gemäß einer weiteren, bevorzugten Ausführungsform der Erfindung,
- Fig.8: eine Schnittansicht gemäß der Schnittlinie VIII - VIII in Fig. 7,
- Fig. 9a: in einem Ausschnitt das an einem von zwei miteinander zu verbindenden, plattenförmigen Bauteilen vormontierte Verbindungsteil vor der Herstellung der Verbindung und
- Fig. 9b: in einem Ausschnitt zwei mit Hilfe einer erfindungsgemäßen Anordnung miteinander verbundene, plattenförmige Bauteile mit festgezogener Schraube.

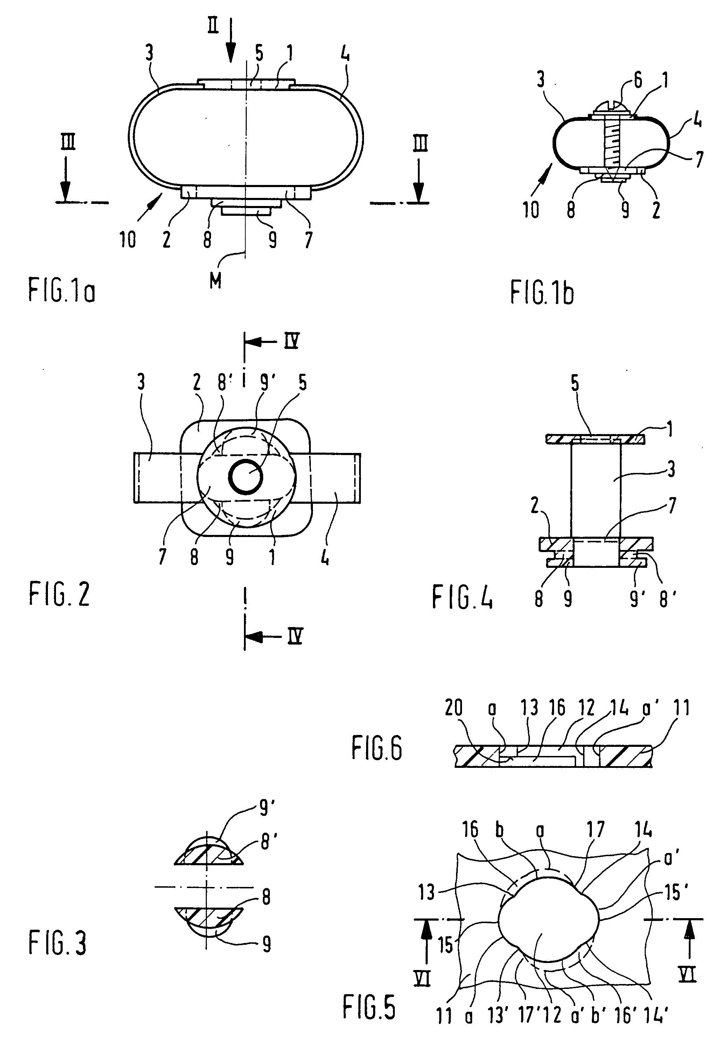

Gemäß Fig. 1a besteht das Verbindungsteil **10** aus zwei parallelen, einander gegenüberliegenden, flachen Abschnitten **1** und **2**, die an ihren entgegengesetzten Seiten durch zwei spiegelbildliche, streifenförmige Halbrunde **3** und **4** zu dem in sich geschlossenen Verbindungsteil **10** verbunden sind. Dieses ist vorzugsweise einstückig aus Kunststoff hergestellt. Die Halbrunde **3** und **4** sind dabei deutlich dünner und, wie aus Fig. 2 zu ersehen ist, auch deutlich schmaler als die Abschnitte 1 und **2** ausgebildet, was ihnen die für den Einsatz des Verbindungsteiles **10** erforderliche Flexibilität verleiht, während die flachen Abschnitte **1** und **2** ein höheres Maß an Steifigkeit aufweisen sollten.

Der obere flache Abschnitt **1** kann, wie aus Fig. 2 erkenntlich ist, in der Draufsicht kreisrund ausgebildet sein. Auf jeden Fall weist er ein mittiges, kreisrundes Loch **5** zur Aufnahme einer Schraube 6 auf (siehe dazu Fig. 1b). Der Durchmesser dieses Loches **5** ist gleich oder vorzugsweise wenig kleiner als der Außendurchmesser der Schraube **6**; bevorzugt kann er gleich dem Flankendurchmesser oder mittleren Gewindedurchmesser der Schraube **6** sein. Die Dicke des oberen Abschnitts **1** entspricht vorzugsweise einer Ganghöhe der Schraube **6**. So kann die Schraube **6** leicht und ohne schraubende Bewegung in das Loch **5** eingedrückt werden und bleibt dann unverlierbar darin gehalten, denn die Schraube **6** paßt unter leichtem Druck gerade mit einer Gewindeganghöhe in das Loch **5** des Abschnitts 1.Der untere flache Abschnitt **2** ist in der dargestellten Ausführungsform als Rechteck mit abgerundeten Ecken ausgebildet und weist ein sich in Richtung der Verlängerung der Halbrunde **3** und **4** erstreckendes, mittiges Langloch 7 auf. An den beiden Längskanten des Langlochs **7** ist mittig jeweils ein senkrecht nach unten gerichteter Ansatz **8, 8'** ausgebildet, von dem sich jeweils im rechten Winkel , also quer zum Langloch **7** ein vorzugsweise halbrunder Fortsatz **9, 9'** erstreckt. Die Fortsätze **9, 9'** bilden so einen Fuß und die Ansätze **8, 8'** eine Art Hals zwischen diesem Fuß und dem unteren flachen Abschnitt **2** des Verbindungsteils **10**. In der dargestellten Ausführungsform stellen sich die Ansätze **8, 8'** und die Fortsätze **9, 9'** als zwei übereinanderliegende Halbkreisprofile mit unterschiedlichen Radien dar, wobei die Fortsätze **9, 9'** in Richtung der gemeinsamen Mittellinie überstehend sind (siehe dazu auch Fig. 3).

Für seinen bestimmungsgemäßen Gebrauch wird das Verbindungsteil **10** mit den Fortsätzen **9, 9'** durch die an der vorgesehenen Verbindungsstelle eines plattenförmigen Bauteils **11** im einfachsten Fall ebenfalls als Langloch ausgebildete Öffnung **12** geschoben und um 90° gedreht, so daß die Fortsätze **9, 9'** die Seitenkanten der Öffnung **12** untergreifen und somit das Verbindungsteil gegen Herausfallen gesichert ist. Die Schraube **6** kann entweder jetzt oder auch schon zuvor in das Loch **5** des Abschnitts **1** eingedrückt werden. Im letzteren, bevorzugten Fall bilden das Verbindungsteil **10** und die Schraube **6** gemeinsam eine Einheit, die so vorrätig gehalten und bei Bedarf in dem plattenförmigen Bauteil **11** vormontiert werden kann.

Um zu vermeiden, daß bei der Endmontage des plattenförmigen Bauteils **11** an einem anderen Bauteil **21** zwischen beiden ein durch die Dicke der Fortsätze 9, 9' bestimmter Abstand bestehen bleibt, können die Fortsätze **9, 9'** in einer kreisförmigen Ausnehmung in der Wand der Öffnung **12** auf der vom Verbindungsteil **10** abgewandten Seite des plattenförmigen Bauteils **11** versenkt sein, innerhalb der sie auf der durch die Ausnehmung entstehenden Stufe zur Auflage kommen und sich um 90° verdrehen lassen.

Gemäß einer Fortbildung der Erfindung kann eine Verdrehsicherung vorgesehen sein, die verhindert, daß sich das Verbindungsteil **10** bei der Vormontage um mehr als 90° verdrehen läßt und daß beim Herstellen der endgültigen Verbindung zwischen zwei Bauteilen **11** und **21** beim Einschrauben der an dem einen Bauteil **11** mit Hilfe des Verbindungsteils **10** vormontierten Schraube **6** in das andere Bauteil **21** sich das Verbindungsteil **10** mitdreht. Dazu erfährt insbesondere die Öffnung **12** in dem für die Vormontage des Verbindungsteils **10** bestimmten plattenförmigen Bauteil **11** eine besondere Ausformung, wie aus den Fig. 5 und 6 erkenntlich ist.

Fig. 5 zeigt die Draufsicht auf die an einer Verbindungsstelle eines plattenförmigen Bauteils **11** vorgesehenen Öffnung **12** und Fig. 6 die Ansicht eines Schnittes entlang der Linie VI - VI in Fig. 5.

Gemäß Fig. 5 weist die Öffnung **12** in der Draufsicht ein Profil auf, das sich aus zweimal zwei, jeweils einander gegenüberliegenden Teilkreisen **a, a', b, b'** zusammensetzt. An den Stoßstellen dieser Teilkreise entstehen in der Wand der Öffnung **12** die Kanten **13** und **14**. Die Teilkreise **a, a'** mit dem kleineren Radius entsprechen in Form, Größe und Abstand den teilkreisförmigen Fortsätzen **9, 9'** des Verbindungsteils **10,** so daß sie, vorzugsweise mit leichtem Spiel, in die Öffnung **12** passen. Die Teilkreise **b, b'** mit dem größeren Radius, die die Teilkreise **a, a'** miteinander verbinden, entsprechen den in der dargestellten Ausführungsform ebenfalls teilkreisförmig ausgebildeten Ansätzen **8, 8'**, die einen Hals zwischen den Fortsätzen **9, 9'** und dem unteren flachen Abschnitt **2** des Verbindungsteils **10** bilden. Beim Verdrehen des Verbindungsteils **10** in der Öffnung **12** um 90° können die Ansätze 8, 8' an den Teilkreisflächen **b, b'** innerhalb der Öffnung **12** entlanggleiten. Auf der von dem einzusetzenden Verbindungsteil **10** abgewandten Seite des Bauteils **11** sind in der Wand der Öffnung **12** jeweils ausgehend von der Scheitellinie **15,15'** der Teilkreise a, a' mit dem kleineren Radius in zwei einander gegenüberliegenden Quadranten und bezogen auf den Mittelpunkt der Öffnung **12** einen Viertelkreis beschreibende Ausnehmungen **16, 16'** vorgesehen, die sich in den anschließenden Quadranten mit dem Radius der kleineren Teilkreise **a, a'** fortsetzen, wodurch hier in der Öffnung **12** die einander gegenüberliegenden Anschlagskanten **17, 17'** entstehen. Das Verbindungsteil **10** kann so mit seinem durch die Fortsätze **9, 9'** gebildeten Fuß in die Öffnung **12** eingesetzt und in den Ausnehmungen **16, 16'** gleitend um 90° gedreht werden, wonach die Fortsätze **9, 9'** an den Anschlagkanten **17, 17'** bzw. dem Abschnitt der Ausnehmungen **16, 16'** mit dem Radius der Teilkreise **a, a'** Anschlag finden und gegen eine weiteres Verdrehen gesichert sind. Die Fortsätze **9, 9'** liegen dabei auf der durch die Ausnehmungen **16, 16'** entstehenden Stufe 20 auf, sind also auch in diesem Fall im Bauteil **11** versenkt.

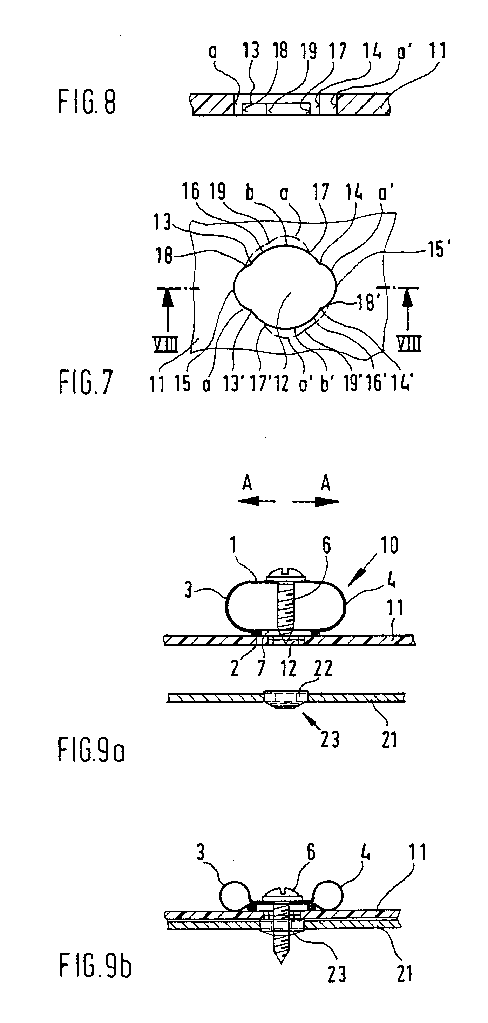

Die Fig. 7 und 8 zeigen eine vorteilhafte Weiterbildung dieser Verdrehsicherung. Die Öffnung **12** stellt sich in der Draufsicht identisch mit der in den Fig. 5 und 6 dar. Die Ausnehmungen **16, 16'** in den einander gegenüberliegenden Quadranten folgen aber, wiederum ausgehend von den Scheitellinien **15, 15'**, über etwa 30° bezogen auf den Mittelpunkt der Öffnung **12** zunächst den kleineren Teilkreisen **a, a',** dann von 30° bis ca. 60 ° einem Teilkreis **c, c'**, dessen Mittelpunkt mit dem der Öffnung **12** zusammenfällt, wonach sich wieder ein kleinerer Teilkreis **a, a'** bis in den benachbarten Quadranten anschließt. Dadurch entstehen innerhalb der Ausnehmungen 16, **16'** beim Winkel von 30° zusätzlich die Rastkanten **18, 18'** und beim Winkel von 60° die Schnappkanten **19, 19'**. Die Öffnung **12** und die Ausnehmungen **16, 16'** sind so bemessen, daß der durch die Fortsätze **9, 9'** gebildete Fuß des Verbindungsteils **10** mit Spiel in die Öffnung **12** eingesetzt werden kann und beim Verdrehen um 90° zunächst unter leichtem Druck den Widerstand der Rastkanten **18, 18'** überwinden muß, danach eng an den Teilkreisen **c, c'** der Ausnehmungen **16, 16'** entlanggleitet, um schließlich hinter den Schnappkanten **19, 19'** einzuschnappen. Damit wird zusätzlich zu der Verdrehsicherung um mehr als 90° gemäß der Ausführungsform nach den Fig. 5 und 6 auch eine Rückdrehsicherung erreicht, denn um das Verbindungsteil **10** in seine Lösestellung zurückdrehen zu können, muß wiederum der Widerstand der Schnappkanten **19, 19'** und Rastkanten **18, 18'** überwunden werden. Ein unbeabsichtigtes Verdrehen oder Herauslösen des Verbindungsteils **10** aus dem Bauteil **11** wird so verhindert.

Fig. 9a zeigt das erfindungsgemäße Verbindungsteil **10** mit eingesetzter Schraube 6 im vormontierten Zustand an einem plattenförmigen Bauteil **11**, das mit einem zweiten, ebenfalls plattenförmigen Bauteil **21** verbunden werden soll. In diesem zweiten Bauteil **21** sind Bohrlöcher **22** für die Schrauben **6** vorgesehen, die nach Anzahl und gegenseitigem Abstand den Öffnungen **12** im Bauteil **11** entsprechen. An den Bohrlöchern **22** können an sich bekannte Mittel, wie Klemmuttern **23** und dergl. ebenfalls vormontiert sein. Zur Herstellung der Verbindung werden die Bohrlöcher **22** im Bauteil **21** mit den Öffnungen **12** im Bauteil **11** möglichst gut zur Deckung gebracht und jede Schraube **6** durch das Langloch **7** im Abschnitt **2** des Verbindungsteils **10** und die Öffnung **12** hindurch in das Bohrloch **22** und die eventuell vorhandene Klemmutter **23** gedreht und festgezogen, wobei sich die Halbrunde **3** und **4** des Verbindungsteils ohrenförmig verformen, wie es in Fig. 9b dargestellt ist. Selbstverständlich kann zum Festziehen der Schraube **6** auch eine andere Art von Blindmutter verwendet oder eine normale Mutter gegengeschraubt werden. Ebenso ist denkbar, daß in einem anderen Anwendungsfall in das Bohrloch **22** ein entsprechendes Innengewinde eingeschnitten ist.

Ein entscheidender Vorteil der Erfindung ist, daß an dem Verbindungsteil **10** das Langloch **7** im Abschnitt **2** zusammen mit der Öffnung **12** im Bauteil 11 einen Toleranzausgleich zwischen der Lage der vormontierten Schraube 6 und dem jeweiligen Bohrloch 22 im zu verbindenden Bauteil 21 erlaubt, wie es in Fig. 9a durch die Pfeile A angedeutet ist. Es muß also nicht jede Schraube 6 von vornherein immer exakt auf das Bohrloch 22 ausgerichtet sein. Dies erlaubt größere Toleranzen beim Setzen der Bohrlöcher 22 und Einschneiden der Öffnungen 12, erleichtert also sowohl die Vorfertigung der Bauteile als auch die Endmontage.

## Patentansprüche

1. Verbindungsmittel zur Vormontage einer Schraube (6) an einem von zwei miteinander zu verbindenden Bauteilen (11, 27), wobei die Schraube (6) in einem durchgehenden Loch (5) eines Verbindungsteils (10) gehalten ist und dieses seinerseits mittels an ihm angeformter Fortsätze (9, 9') mit den Kanten einer Öffnung (12) eben dieses einen Bauteils (11) derart in Eingriff bringbar ist daß die Schraube (6) unter Verformung des Verbindungsteils (10) durch die Öffnung (12) des Bauteils hindurch bewegbar ist,
**dadurch gekennzeichnet,**
**daß** das Verbindungsteil **(10)** aus zwei einander mit Abstand gegenüberliegenden, flachen Abschnitten **(1, 2)** besteht, die durch zwei zur vertikalen Mittelachse **(M)** spiegelbildlich angeordnete Halbrunde **(3, 4)** zu einem in sich geschlossenen Teil verbunden sind, daß in dem einen, von der Montagefläche des Bauteils **(11)** entfernteren Abschnitt **(1)** ein kreisrundes Loch **(5)** zur Aufnahme der Schraube **(6)** und in dem anderen, auf der Montagefläche zur Auflage kommenden Abschnitt **(2)** ein in der Verlängerung der Halbrunde **(3, 4)** liegendes Langloch **(7)** vorgesehen ist, durch das hindurch die Schraube **(6)** unter Verformung der Halbrunde **(3, 4)** vorschiebbar ist, und daß an den Längsseiten des Langlochs **(7)** in einem durch Ansätze **(8, 8')** bestimmten Abstand horizontale Fortsätze **(9, 9')** angeformt sind, mit denen Kanten einer Öffnung **(12)** in dem einen **(11)** der zu verbindenden Bauteile **(11, 21)** hintergreifbar sind.

2. Verbindungsmittel nach Anspruch 1, **dadurch gekennzeichnet, daß** die Dicke des von der Montagefläche entfernteren Abschnitts **(1)** des Verbindungsteils **(10)** mit dem kreisrunden Loch **(5)** zur Aufnahme der Schraube **(6)** der Ganghöhe der Schraube **(6)** entspricht und der Durchmesser des kreisrunden Loches **(5)** gleich oder wenig kleiner als der Außendurchmesser der Schraube **(6)** ist.

3. Verbindungsmittel nach Abspruch 2, **dadurch gekennzeichnet, daß** der Durchmesser des kreisrunden Loches **(5)** gleich dem mittleren Gewindedurchmesser der Schraube **(6)** ist.

4. Verbindungsmittel nach einem der vorangehenden Ansprüche in Kombination mit einem plattenförmigen Banteil **(11)**, **dadurch gekennzeichnet, daß** die Öffnung **(12)** an der vorgesehenen Verbindungsstelle des plattenförmigen Bauteils **(11)** die Form eines Langlochs aufweist, in dessen Längsrichtung das Verbindungsteil **(10)** mit seinen Fortsätzen **(9, 9')** einsteckbar ist und dessen Längskanten bei einer anschließenden Drehung des Verbindungsteils **(10)** um 90° von diesen Fortsätzen **(9, 9')** untergreifbar sind.

5. Kombination nach Anspruch 4, **dadurch gekennzeichnet, daß** in der Wand der Öffnung **(12)** des plattenförmigen Bauteils **(11)** auf der vom Verbindungsteil (10) abgewandten Seite eine Ausnehmung **(16)** vorgesehen ist, innerhalb der die Fortsätze (9, 9') versenkt und auf einer Stufe **(20)** Auflage findend um 90° drehbar sind.

6. Kombination nach einem der Ansprüche 4 oder 5, **dadurch gekennzeichnet, daß** die Fortsätze (9, 9') ein teilkreisförmiges Profil aufweisen und die Schmalseiten der langlochförmigen Öffnung **(12)** in dem einen der zu verbindenden Bauteile **(11)** dementsprechend teilkreisförmig ausgebildet sind.

7. Kombination nach einem der Ansprüche 4 bis 6, **dadurch gekennzeichnet, daß** die Fortsätze **(9, 9')** und die deren Abstand zum auf dem Bauteil **(11)** zur Auflage kommenden Abschnitt **(2)** des Verbindungsteils **(10)** bestimmenden Ansätze **(8, 8')** als übereinander liegende, teilkreisförmige Profile mit unterschiedlichem Radius ausgebildet sind, wobei die Fortsätze **(9, 9')** in Richtung ihrer Mittellinie überstehend sind.

8. Kombination nach Anspruch 7, **dadurch gekennzeichnet, daß** die Öffnung **(12)** in dem plattenförmigen Bauteil **(11)** in der Draufsicht ein Profil aufweist, das sich aus zweimal zwei, jeweils einander gegenüberliegenden Teilkreisen **(a, a', b, b')** mit unterschiedlichen Radien zusammensetzt, wobei die Teilkreise **(a, a')** mit dem kleineren Radius in Form, Größe und gegenseitigem Abstand den teilkreisförmigen Fortsätzen **(9, 9')** des Verbindungsteils **(10)** und die Teilkreise **(b, b')** mit dem größeren Radius den teilkreisförmig ausgebildeten Ansätzen **(8, 8')** entsprechen.

9. Kombination nach Anspruch 8, **dadurch gekennzeichnet, daß** auf der von dem einzusetzenden Verbindungsteil **(10)** abgewandten Seite des plattenförmigen Bauteils **(11)** in der Wand der Öffnung **(12)** jeweils ausgehend von der Scheitellinie **(15,15')** der Teilkreise **(a, a')** mit dem kleineren Radius in zwei einander gegenüberliegenden Quadranten und bezogen auf den Mittelpunkt der Öffnung **(12)** einen Viertelkreis beschreibende Ausnehmungen **(16, 16')** vorgesehen sind, die sich in den anschließenden Quadranten mit dem Radius der kleineren Teilkreise **(a, a')** fortsetzen, wodurch in der Wand der Öffnung **(12)** einander gegenüberliegende Anschlagskanten **(17, 17')** für die Fortsätze **(9, 9')** des Verbindungsteils **(10)** gebildet sind.

10. Kombination nach Anspruch 8, **dadurch gekennzeichnet, daß** auf der von dem einzusetzenden Verbindungsteil **(10)** abgewandten Seite des Bauteils **(11)** in der Wand der Öffnung **(12)** jeweils ausgehend von der Scheitellinie **(15,15')** der Teilkreise **(a, a')** mit dem kleineren Radius in zwei einander gegenüberliegenden Quadranten Ausnehmungen **(16, 16')** vorgesehen sind, die über 30° bezogen auf den Mittelpunkt der Öffnung **(12)** zunächst den kleineren Teilkreisen **(a, a')** der Öffnung **(12)**, dann von 30° bis ca. 60 ° Teilkreisen (c, c'), deren gemeinsamer Mittelpunkt mit dem der Öffnung **(12)** zusammenfällt, und danach bis in den benachbarten Quadranten wieder Teilkreisen **(a, a')** gleich denen mit dem kleineren Radius der Öffnung **(12)** folgen, wodurch innerhalb dieser Ausnehmungen **(16, 16')** beim Winkel von 30° Rastkanten **(18, 18')**, beim Winkel von 60° Schnappkanten **(19, 19')** und im benachbarten Quadranten die Anschlagskanten (17, 17') für die Fortsätze (9, 9') des Verbindungteils (10) gebildet sind.

11. Kombination nach Anspruch 10, **dadurch gekennzeichnet, daß** die Öffnung **(12)** in dem plattenförmigen Bauteil **(11)** und die in ihrer Wand vorgesehenen Ausnehmungen **(16, 16')** so bemessen sind, daß die Fortsätze **(9, 9')** des Verbindungsteils **(10)** in einer Richtung mit Spiel in diese Öffnung **(12)** einsetzbar und beim anschließenden Verdrehen um 90° nach Überwindung eines leichten, durch die Rastkanten **(18, 18')** entgegengesetzten Widerstandes zwischen 30° und 60° eng an den Teilkreisen (c, c') der Ausnehmungen **(16, 16')** entlang führbar und danach hinter den Schnappkanten **(19, 19')** einschnappbar sind.

## Claims

1. Connecting means for pre-assembly of a screw (6) to one of two components (11, 27) which are to be connected together, wherein the screw (6) is held in a through hole (5) in a connecting portion (10) and same in turn by means of extensions (9, 9') formed thereon can be brought into engagement with the edges of an opening (12) in precisely said one component (11) in such a way that the screw (6) is movable through the opening (12) in the component with deformation of the connecting portion (10), **characterised in that** the connecting portion (10) comprises two flat parts (1, 2) which are disposed in mutually opposite spaced relationship and which are connected to form a portion which is closed in itself by two half-round parts (3, 4) arranged in mirror-image relationship with respect to the vertical centre line (M), that provided in the one part (1) which is more remote from the assembly surface of the component (11) is a circular hole (5) for receiving the screw (6) and provided in the other part (2) which comes to bear against the assembly surface is a slot (7) which is disposed in line with the half-round parts (3, 4) and through which the screw (6) can be advanced with deformation of the half-round parts (3, 4), and that formed at the longitudinal sides of the slot (7) at a spacing determined by projections (8, 8') are horizontal extensions (9, 9') which can engage behind edges of an opening (12) in the one (11) of the components (11, 21) to be connected.

2. Connecting means according to claim 1 **characterised in that** the thickness of the part (1) of the connecting portion (10), which is more remote from the assembly surface, with the circular hole (5) for receiving the screw (6), corresponds to the pitch height of the screw (6) and the diameter of the circular hole (5) is equal to or slightly smaller than the outside diameter of the screw (6).

3. Connecting means according to claim 2 **characterised in that** the diameter of the circular hole (5) is equal to the mean screwthread diameter of the screw (6).

4. Connecting means according to one of the preceding claims in combination with a plate-shaped component (11) **characterised in that** the opening (12) at the intended connecting location of the plate-shaped component (11) is in the form of a slot, in the longitudinal direction of which the connecting portion (10) can be inserted with its extensions (9, 9') and below the longitudinal edges of which said extensions (9, 9') can engage upon subsequent rotation of the connecting portion (10) through 90°.

5. A combination according to claim 4 **characterised in that** provided in the wall (12) of the plate-shaped component (11) on the side remote from the connecting portion (10) is a recess (16) within which the extensions (9, 9') are sunk and are rotatable through 90° resting on a step (20).

6. A combination according to one of claims 4 and 5 **characterised in that** the extensions (9, 9') are of a part-circular profile and the narrow sides of the slot-shaped opening (12) in the one of the components (11) to be connected are of a correspondingly part-circular configuration.

7. A combination according to one of claims 4 to 6 **characterised in that** the extensions (9, 9') and the projections (8, 8') determining the spacing thereof relative to the part (2) of the connecting portion (10) which rests on the component (11) are in the form of mutually superposed, part-circular profiles of different radii, wherein the extensions (9, 9') are projecting in the direction of the centre line thereof.

8. A combination according to claim 7 **characterised in that** in plan view the opening (12) in the plate-shaped component (11) is of a profile which is composed of twice two respectively mutually opposite part-circles (a, a', b, b') of different radii, wherein the part-circles (a, a') with the smaller radius correspond in shape, size and mutual spacing to the part-circular extensions (9, 9') of the connecting portion (10) and the part-circles (b, b') with the larger radius correspond to the projections (8, 8') of part-circular configuration.

9. A combination according to claim 8 **characterised in that** provided on the side of the plate-shaped component (11), which is remote from the connecting portion (10) to be inserted, in the wall of the opening (12), each starting from the apex line (15, 15') of the part-circles (a, a') with the smaller radius, are recesses (16, 16') which describe a quarter-circle in relation to the centre point of the opening (12) and in two mutually oppositely disposed quadrants, which recesses are continued in the adjoining quadrants with the radius of the smaller part-circles (a, a'), whereby formed in the wall of the opening (12) are mutually opposite abutment edges (17, 17') for the extensions (9, 9') of the connecting portion (10).

10. A combination according to claim 8 **characterised in that** provided on the side of the component (11), which is remote from the connecting portion (10) to be inserted, in the wall of the opening (12), each starting from the apex line (15, 15') of the part-circles (a, a') with the smaller radius, in two mutually opposite quadrants, are recesses (16, 16') which over 30° with respect to the centre point of the opening (12) initially follow the smaller part-circles (a, a') of the opening (12), then from 30° to about 90° follow part-circles (c, c') whose common centre point coincides with that of the opening (12) and thereafter to the adjacent quadrants again follow part-circles (a, a') identical to those with the smaller radius of the opening (12), whereby formed within said recesses (16, 16') at the angle of 30° are retaining edges (18, 18'), at the angle of 60° snap edges (19, 19') and in the adjacent quadrant the abutment edges (17, 17') for the extensions (9, 9') of the connecting portion (10).

11. A combination according to claim 10 **characterised in that** the opening (12) in the plate-shaped component (11) and the recesses (16, 16') in the wall thereof are so dimensioned that the extensions (9, 9') of the connecting portion (10) can be inserted in one direction with play into said opening (12) and upon subsequent rotation through 90° after overcoming a slight resistance opposed by the retaining edges (18, 18') can be guided between 30° and 60° closely along the part-circles (c, c') and thereafter can be snapped behind the snap edges (19, 19').

## Revendications

1. Moyen de liaison pour le montage préalable d'une vis (6) sur l'un de deux éléments de construction (11, 27) devant être assemblés l'un avec l'autre, la vis (6) étant en l'occurrence maintenue dans un trou débouchant (5) ménagé dans un organe d'assemblage (10) et celui-ci étant à son tour destiné à être amené en prise d'engagement, au moyen de prolongements (9, 9') réalisés solidaires de celui-ci, avec les bords d'une ouverture (12) également ménagée dans cet élément de construction (11), dans des conditions telles que la vis (6) est susceptible d'être mue au travers de l'ouverture (12) de l'élément de construction en provoquant la déformation de l'organe de liaison (10), **caractérisé en ce que** l'organe de liaison (10) se compose de deux portions aplaties (1, 2) disposées de manière diamétralement opposée à une certaine distance l'une de l'autre, qui sont reliées ensemble par deux portions semi-circulaires (3, 4) disposées de manière symétrique par rapport à l'axe médian vertical, pour former ainsi un élément fermé, **en ce que**, dans la portion (1), éloignée de la face d'assemblage de l'élément de construction (11), il est prévu un trou de forme circulaire (5) destiné à recevoir la vis (6) et dans l'autre portion (2), en contact d'appui avec ladite face de montage, il est prévu un trou oblong (7) dans le prolongement des portions semi-circulaires (3, 4), au travers duquel la vis (6) est destinée à être enfoncée en provoquant la déformation des portions semi-circulaires (3, 4) et **en ce que** des prolongements horizontaux (9, 9') sont réalisés solidaires par formage des côtés longitudinaux du trou oblong (7) à une distance définie par des épaulements (8, 8'), pouvant venir cramponner par derrière les bords d'une ouverture (12) ménagée dans l'un (11) des deux éléments de construction (11, 21) à assembler.

2. Moyen d'assemblage selon la revendication 1, **caractérisé en ce que** l'épaisseur de la portion (1), éloignée de la face d'assemblage, de l'organe de liaison (10) comprenant le trou de forme circulaire (5) pour le passage de la vis (6) correspond au pas de filetage de la vis (6) et **en ce que** le diamètre du trou circulaire (5) est égal au diamètre extérieur de la vis (6) ou est légèrement plus petit que celui-ci.

3. Moyen d'assemblage selon la revendication 2, **caractérisé en ce que** le diamètre du trou circulaire (5) est égal au diamètre à flancs de filets de la vis (6).

4. Moyen d'assemblage selon l'une des revendications qui précèdent, en combinaison avec un élément de construction en forme de plaque (11), **caractérisé en ce que** l'ouverture (12) ménagée à l'emplacement d'assemblage prévu de l'élément de construction en forme de plaque (11) se présente sous la forme d'un trou oblong, dans le sens longitudinal duquel l'organe de liaison (10) est destiné à être emmanché au moyen de ses prolongements (9, 9') et dont les bords longitudinaux sont destinés à être cramponnés par derrière par ces prolongements (9, 9') lorsqu'on imprime ensuite à l'organe de liaison (10) un mouvement de rotation dans une proportion de 90°.

5. Combinaison selon la revendication 4, **caractérisée en ce qu'**il est prévu, dans la paroi de l'ouverture (12) de l'élément de construction en forme de plaque (11), sur le côté orienté à l'opposé de l'organe de liaison (10), un évidement (16), à l'intérieur duquel les prolongements (9, 9') sont destinés à être insérés et à faire l'objet d'une rotation de 90° en prenant en l'occurrence appui sur un gradin (20).

6. Combinaison selon l'une des revendications 4 ou 5, **caractérisée en ce que** les prolongements (9, 9') présentent un profil en portion d'arc de cercle et **en ce que** les petits côtés de l'ouverture de forme oblongue (12) ménagée dans l'un (11) des éléments de construction à assembler, ont, en correspondance, une configuration en forme de portion d'arc de cercle.

7. Combinaison selon l'une des revendications 4 à 6, **caractérisée en ce que** les prolongements (9, 9') et les épaulements (8, 8') déterminant leur distance par rapport à la portion (2) de l'organe de liaison (10) venant en contact d'assise sur l'élément de construction (11) se présentent sous la forme d'éléments profilés en portion d'arc de cercle, de rayon différent, disposés l'un au-dessus de l'autre, les prolongements (9, 9') étant en l'occurrence en saillie dans la direction de leur axe médian.

8. Combinaison selon la revendication 7, **caractérisée en ce que** l'ouverture (12) ménagée dans l'élément de construction en forme de plaque (11) présente, vue en plan depuis le dessus, un profil qui se compose de deux portions de cercle (a, a', b, b') respectivement superposées, de rayon différent, les portions de cercle (a, a') de plus petit rayon correspondant, du point de vue forme, dimension et intervalle d'écartement réciproque, aux prolongements en forme de portions d'arc de cercle (9, 9') de l'organe de liaison (10) et les portions de cercle (b, b') de plus grand rayon aux épaulements (8, 8') présentant une configuration en forme de portion d'arc de cercle.

9. Combinaison selon la revendication 8, **caractérisée en ce que**, sur le côté de l'élément de construction en forme de plaque (11) se trouvant à l'opposé de l'organe de liaison (10) à utiliser, il est prévu, dans la paroi de l'ouverture (12), partant respectivement de la ligne de crête (15, 15') des portions de cercle (a, a') de plus petit rayon, dans deux quarts de cercle diamétralement opposés et définissant un quart de cercle par rapport au centre de l'ouverture (12), des évidements (16, 16') qui se prolongent dans les quarts de cercle attenants possédant le rayon des portions de cercle (a, a'), cet agencement définissant ainsi, dans la paroi de l'ouverture (12), des arêtes de butées (17, 17') respectivement superposées, pour les prolongements (9, 9') de l'organe de liaison (10).

10. Combinaison selon la revendication 8, **caractérisée en ce que**, sur le côté de l'élément de construction en forme de plaque (11) se trouvant à l'opposé de l'organe de liaison (10) à utiliser, il est prévu, dans la paroi de l'ouverture (12), partant respectivement de la ligne de crête (15, 15') des portions de cercle (a, a') de plus petit rayon, dans deux quarts de cercle diamétralement opposés, des évidements (16, 16') qui correspondent sur 30° par rapport au centre de l'ouverture (12) tout d'abord aux petites portions de cercle (a, a') de l'ouverture (12) puis, de 30° jusqu'à 60°, aux portions de cercle (c, c'), dont le centre commun coïncide avec l'ouverture (12) et que suivent ensuite, jusque dans les quarts de cercle voisins, à nouveau des portions de cercle (a, a') identiques à celles de plus petit rayon de l'ouverture (12), configuration qui définit, à l'intérieur de ces évidements (16, 16'), pour l'angle de 30° des arêtes d'accrochage (18, 18'), pour l'angle de 60° des arêtes d'encastrement à déclic (19, 19') et dans les quarts de cercle voisins les arêtes de butée (17, 17') pour les prolongements (9, 9') de l'organe de liaison (10).

11. Combinaison selon la revendication 10, **caractérisée en ce que** l'ouverture (12), réalisée dans l'élément de construction en forme de plaque (11) et les évidements (16, 16'), prévus dans sa paroi, sont dimensionnés de telle façon que les prolongements (9, 9') de l'organe de liaison (10) sont destinés à être insérés, dans cette ouverture (12), dans un sens avec un certain jeu et lors de la rotation de 90° qui est ensuite imprimée à l'organe de liaison, sont destinées, après avoir surmonté une légère résistance antagoniste opposée par les arêtes d'accrochage (18, 18') , à être guidés, entre 30 et 60°, le long des évidements (16, 16') en épousant étroitement le tracé des portions de cercle (c, c') et ensuite à venir s'encastrer en prise derrière les arêtes d'encastrement à déclic (19, 19').
